# EUROPÄISCHE PATENTSCHRIFT

(11) **EP 2 136 248 B1**
(45) Veröffentlichungstag und Bekanntmachung des Hinweises auf die Patenterteilung: **02.11.2016**
(21) Anmeldenummer: 08011246.9
(22) Anmeldetag: 20.06.2008
(51) Int. Cl.: G03B 13/18, G03B 15/03, G06K 7/10

(54) **Bildaufnahmevorrichtung mit anpassbarer Beleuchtung**
Picture taking device with adaptive illumination
Dispositif d'enregistrement d'images avec illumination adaptatif

(43) Veröffentlichungstag der Anmeldung: 23.12.2009
(73) Patentinhaber: SICK AG, 79183 Waldkirch/Breisgau (DE)
(72) Erfinder: Nübling, Ralf Ulrich, 79211 Denzlingen (DE); Weber, Helmut, 79312 Emmendingen (DE)
(74) Vertreter: Manitz, Finsterwald & Partner GbR

(56) Entgegenhaltungen:
- EP-A- 1 112 522
- WO-A-99/64980
- JP-A- S6 367 692
- JP-A- 2005 234 367
- US-A- 4 874 933
- US-A1- 2007 131 770
- US-B1- 6 179 208
- US-B1- 6 889 903

## Beschreibung

Die vorliegende Erfindung betrifft eine Bildaufnahmevorrichtung, insbesondere Kamera, zur Identifikation von Objekten, mit einer fokussierbaren Empfangsoptik und einer eine Objekt- und/oder Positionierbeleuchtung umfassenden Beleuchtungseinheit gemäß den Merkmalen des Oberbegriffs des Anspruchs 1. Eine derartige Bildaufnahmevorrichtung ist aus der US 4,874,933 oder der US 6, 889,903 B1 bekannt.

Zur Identifikation von Objekten, beispielsweise zum Lesen von Barcodes auf Paketen oder zum Erkennen, Bewerten und/oder Analysieren von Mustern auf Objekten, kann eine Bildaufnahmevorrichtung mit einer Objektbeleuchtung ausgestattet sein, durch die das jeweilige Objekt beleuchtet wird. Hierbei wird oft versucht, ein möglichst homogenes Bild von dem Objekt zu erzeugen. Beispielsweise kann hierzu vorgesehen sein, dass das Objekt an den Randbereichen stärker beleuchtet wird als im Zentrum (Randüberhöhung), um eine Vignettierung der Empfangsoptik zu kompensieren. Dies kann z.B. durch geschickte Überlagerung mehrerer Lichtquellen und/oder die Verwendung entsprechender diffraktiv-optischer Elemente und/oder Freiformflächen erreicht werden, wobei die Objektbeleuchtung jeweils auf einen bestimmten Abstand des Objekts von der Bildaufnahmevorrichtung optimiert ist.

Objekte, die einen von dem bestimmten Abstand abweichenden Abstand zu der Bildaufnahmevorrichtung besitzen, können mittels der fokussierbaren Empfangsoptik zwar scharf gestellt werden, werden dann in der Regel jedoch nicht mehr optimal beleuchtet, so dass inhomogene Bilder entstehen können.

Entsprechendes gilt für eine optische Positionierhilfe, die beispielsweise dazu vorgesehen sein kann, Information über Lage, Ausrichtung und/oder Abstand des jeweiligen Objekts von der Bildaufnahmevorrichtung zu liefern oder beim Einrichten der Bildaufnahmevorrichtung den gewünschten Abstand und/oder die gewünschte Orientierung der Bildaufnahmevorrichtung zum Objekt einzustellen. Bei einer derartigen optischen Positionierhilfe kann es sich beispielsweise um schräg zueinander verlaufende Laserstrahlen handeln, die sich in einem vorgegebenen Abstand von der Bildaufnahmevorrichtung schneiden, oder um eine auf einen vorgegebenen Abstand scharf gestellte Abbildung eines Objekts, z.B. einer Blendenkontur oder einer LED.

Eine derartige optische Positionierhilfe, die üblicherweise auch als Positionierbeleuchtung bezeichnet wird, ist daher ebenfalls auf einen bestimmten Abstand optimiert.

Das Dokument JP 63-67692 offenbart eine Bildaufnahmevorrichtung der eingangs genannten Art, wobei die Positionierbeleuchtung verstellbar und hierdurch an die Fokussierung der Empfangsoptik anpassbar ist, wobei die Positionierbeleuchtung derart an die Empfangsoptik gekoppelt ist, dass eine Verstellung der Fokussierung der Empfangsoptik automatisch eine Anpassung der Positionierbeleuchtung an die verstellte Fokussierung bewirkt, wobei die Beleuchtungseinheit eine Lichtquelleneinheit mit wenigstens einer Lichtquelle umfasst, und wobei die Positionierbeleuchtung wenigstens ein Paar Lichtquellen umfasst, um gebündelte Lichtstrahlen zu erzeugen, die sich in der durch die Empfangsoptik scharf gestellten Entfernung schneiden.

Aufgabe der vorliegenden Erfindung ist es, eine Bildaufnahmevorrichtung der eingangs genannten Art zu schaffen, die die vorstehend genannten Nachteile vermeidet.

Diese Aufgabe wird durch eine Bildaufnahmevorrichtung mit den Merkmalen des Anspruchs 1 gelöst, und insbesondere dadurch, dass die Objekt- und/oder Positionierbeleuchtung verstellbar und hierdurch an die Fokussierung der Empfangsoptik anpassbar ist, wobei die Objekt- und/ oder Positionierbeleuchtung derart an die Empfangsoptik gekoppelt ist, dass eine Verstellung der Fokussierung der Empfangsoptik automatisch eine Anpassung der Objekt- und/oder Positionierbeleuchtung an die verstellte Fokussierung bewirkt.

Die Objekt- und/oder Positionierbeleuchtung ist also verstellbar und an die Fokussierung der Empfangsoptik anpassbar. Eine Verstellung der Fokussierung der Empfangoptik bewirkt dabei zwingend und/oder automatisch eine der verstellten Fokussierung angepasste Verstellung der Objekt- und/oder Positionierbeleuchtung. Insbesondere ist eine manuelle Vornahme der Anpassung nicht notwendig, da die Objekt- und/oder Positionierbeleuchtung fest an die Empfangsoptik gekoppelt ist.

Durch die erfindungsgemäße Bildaufnahmevorrichtung kann erreicht werden, dass auch für verschiedene Fokussierungen oder Entfernungseinstellungen oder Scharfstellungen der Empfangsoptik jeweils eine zumindest weitgehend optimale Objekt- und/oder Positionierbeleuchtung gewährleistet werden kann. Folglich ist es nicht notwendig, für verschiedene Abstände, in denen sich die Objekte befinden können, mehrere Bildaufnahmevorrichtung zur Verfügung zu stellen, deren Objekt- und/oder Positionierbeleuchtungen jeweils nur auf einen einzigen Abstand optimiert und voneinander verschieden sind.

Insbesondere ist vorgesehen, dass die Beleuchtungseinheit, insbesondere Strahlformungsoptiken der Beleuchtungseinheit wie Um- und/oder Ablenkoptiken, auf die Empfangsoptik, insbesondere deren Charakteristiken, abgestimmt ist, und/oder gewährleistet, dass die Objekt- und/oder Positionierbeleuchtung mit dem tatsächlichen Objektbereich der Empfangsoptik, d.h. der eingestellten Entfernung, übereinstimmt. Insbesondere wird das Optikdesign der Beleuchtungseinheit und der Empfangsoptik so aufeinander abgestimmt, dass für jede Entfernungseinstellung, insbesondere für alle geforderten Arbeitsabstände, eine angepasste und/oder optimale Objekt- und/oder Positionierbeleuchtung gewährleistet ist.

Bei der erfindungsgemäßen Bildaufnahmevorrichtung kann lediglich die Positionierbeleuchtung oder es können beide Beleuchtungen vorgesehen sein. Sind beide Beleuchtungen vorhanden, kann auch vorgesehen sein, dass lediglich eine der beiden Beleuchtungen verstellbar und an die Fokussierung der Empfangsoptik anpassbar ist. Die Wellenlängen des Lichts der Lichtquellen für die Objekt- und Positionierbeleuchtung können gleich oder verschieden sein.
Die Entfernungseinstellung der Empfangsoptik kann beispielsweise manuell, motorisch oder aber auch mittels anderer Aktoren wie z.B. Piezoaktoren oder Tauchspulen, mit oder ohne Autofokus erfolgen. Die Empfangsoptik kann kontinuierlich oder in diskreten Schritten verstellbar sein. Darüber hinaus kann die Empfangsoptik ein- oder mehrteilig, insbesondere ein- oder mehrlinsig, ausgebildet sein und gegebenenfalls weitere Komponenten wie beispielsweise Fremdlichtfilter oder Scheiben umfassen. Weiterhin kann die Empfangsoptik transmittiv, bei Verwendung von z.B. Linsen, und/oder reflektiv, bei Verwendung von z.B. Spiegeln, ausgeführt sein.

Die Beleuchtungseinheit umfasst eine Lichtquelleneinheit mit wenigstens einer Lichtquelle und eine der Lichtquelleneinheit zugeordnete Strahlformungsoptikeinheit mit wenigstens einer Strahlformungsoptik. Es können auch mehrere Lichtquellen und mehrere Strahlformungsoptiken vorgesehen sein, wobei dann jeder Lichtquelle eine eigene Strahlformungsoptik zugeordnet sein kann. Darüber hinaus ist es auch möglich, dass eine Strahlformungsoptik mehreren Lichtquellen zugeordnet ist, d.h. es können mehrere Lichtquellen mit einer gemeinsamen Strahlformungsoptik vorgesehen sein. Eine jeweilige Lichtquelle oder eine jeweilige Strahlformungsoptik kann der Objektbeleuchtung oder der Positionierbeleuchtung zugehörig sein.

Unter dem Begriff "Licht" soll elektromagnetische Strahlung im Allgemeinen verstanden werden, d.h. insbesondere ultraviolettes Licht (UV), sichtbares Licht (VIS) und infrarotes Licht (IR).

Eine jeweilige Strahlformungsoptik kann ein- oder mehrteilig, insbesondere ein- oder mehrlinsig, ausgebildet sein und gegebenenfalls weitere Komponenten wie beispielsweise Blenden oder Konturen umfassen. Darüber hinaus kann eine jeweilige Strahlformungsoptik Linsen, Freiformflächen, diffraktiv-optische Elemente (DOE), holographisch-optische Elemente (HOE) und/oder Keile zur Strahlrichtungsänderung umfassen. Weiterhin kann eine jeweilige Strahlformungsoptik transmittiv, bei Verwendung von z.B. Linsen, und/oder reflektiv, bei Verwendung von z.B. Spiegeln, ausgeführt sein. Außerdem kann eine jeweilige Strahlformungsoptik oder ein oder mehrere Teile hiervon eine oder mehrere ebene und/oder gekrümmte Flächen aufweisen, an denen die von der jeweils zugeordneten Lichtquelle ausgesandten Lichtstrahlen gebrochen und/oder reflektiert werden.

Die Anpassung der Positionierbeleuchtung und optional der Objektbeleuchtung erfolgt durch Verstellung der relativen Lage der Strahlformungsoptikeinheit zu der Lichtquelleneinheit, insbesondere des Abstands zwischen der Strahlformungsoptikeinheit und der Lichtquelleneinheit.

Insbesondere kann die Verstellung der Fokussierung der Empfangsoptik durch axiales Verschieben der Empfangsoptik oder des für die Verstellung der Fokussierung maßgeblichen Teils hiervon, wie beispielsweise bei einer Innenfokussierung, bei der die Entfernungseinstellung nicht durch Verschieben der gesamten Empfangsoptik, sondern durch Verschieben einer oder mehrerer einzelner Linsen erfolgt, wodurch die Brennweite der Empfangsoptik geändert wird, erfolgen. Die Verstellung der Objekt- und/oder Positionierbeleuchtung kann durch axiales Verschieben der Lichtquelleneinheit und/oder der Strahlformungsoptikeinheit erfolgen.

Die Beleuchtungseinheit und die Empfangsoptik können derart miteinander gekoppelt sein, dass eine axiale Verschiebung der Empfangsoptik oder des für die Verstellung der Fokussierung maßgeblichen Teils hiervon eine entsprechende axiale Verschiebung der Lichtquellen- oder Strahlformungsoptikeinheit bewirkt, d.h. die axialen Verschiebungen können denselben Hub besitzen. Grundsätzlich ist es jedoch auch möglich, dass die Lichtquelleneinheit oder die Strahlformungsoptikeinheit über ein Übersetzungsverhältnis, insbesondere ungleich 1, mit der Empfangsoptik gekoppelt ist, d.h. die Lichtquelleneinheit oder die Strahlformungsoptikeinheit wird nicht um denselben Weg verschoben wie die Empfangsoptik bzw. deren maßgeblicher Teil.

Die Lichtquelleneinheit oder die Strahlformungsoptikeinheit oder ein Teil hiervon kann fest mit der Empfangsoptik oder dem für die Verstellung der Fokussierung maßgeblichen Teil verbunden sein. Aufwändige mechanische und/oder elektrische Konstruktionen zur Koppelung der Beleuchtungseinheit an die Empfangsoptik können dann entfallen.

Nach einer anderen Ausbildung der Erfindung erfolgt die Anpassung der Objekt- und/oder Positionierbeleuchtung durch Änderung der Brennweite der Objekt- und/oder Positionierbeleuchtung und/oder durch Änderung der Neigung der Abstrahlrichtungen von von der Bildaufnahmevorrichtung ausgesandten Strahlenbündeln gegenüber der optischen Achse der Empfangsoptik.

Um vor allem bei größeren Objekten eine bessere Objektbeleuchtung und/oder großflächige Positionierbeleuchtung zu erreichen, können mehrere Lichtquellen und mehrere zugeordnete Strahlformungsoptiken vorgesehen sein.

Die Positionierbeleuchtung umfasst wenigstens ein Paar Lichtquellen, insbesondere Lasersender oder Leuchtdioden, und eine oder mehrere, dem wenigstens einem Paar Lichtquellen zugeordnete Strahlformungsoptiken, um gebündelte Lichtstrahlen zu erzeugen, die sich in der durch die Empfangsoptik scharf gestellten Entfernung schneiden. Bei den Lichtstrahlen handelt es sich bevorzugt jeweils um ein paralleles Strahlenbündel, welches einen begrenzten Querschnitt aufweist, so dass beim Auftreffen auf den Objekten Lichtpunkte, d.h. z.B. annähernd punktförmige Lichtflecke, erzeugt werden. Es können aber auch alle anderen Geometrien vorteilhaft genutzt werden, z.B. auch zwei Linien, die sich zu einem Kreuz überlagern. Andere Beispiele umfassen zwei Ringe, die in der Scharfstellung konzentrisch sind, oder zwei Punkte, die in der Scharfstellung einen minimalen Abstand zueinander haben.

Grundsätzlich können auch mehr als nur zwei Lichtstrahlen Verwendung finden, die einen oder mehrere Schnittpunkte oder Muster bilden.

Insbesondere ist die Anordnung und/oder Gestaltung der Beleuchtungseinheit, beispielsweise der Aufbau, die Form und/oder eine oder mehrere Um- und/oder Ablenkflächen der Beleuchtungseinheit, auf die verschiedenen Fokussierungen der Empfangsoptik abgestimmt, d.h. das Optikdesign der Empfangsoptik und der Beleuchtungseinheit ist derart aufeinander abgestimmt, dass für alle möglichen Fokussierungen, insbesondere verschiedene Stellungen der Empfangsoptik, eine zumindest weitgehend optimale Objekt- und/oder Positionierbeleuchtung gegeben ist. Beispielsweise kann die Beleuchtungseinheit wenigstens eine Strahlformungsoptik umfassen, die eine gekrümmte Fläche aufweist, an der von einer zugeordneten Lichtquelle ausgesandte Lichtstrahlen gebrochen und/oder reflektiert werden, wobei die Lichtstrahlen in verschiedenen Stellungen der Empfangsoptik und/oder wenigstens einen Strahlformungsoptik an unterschiedlichen Stellen oder Bereichen der gekrümmten Fläche gebrochen und/oder reflektiert werden.

Eine Möglichkeit der Objektbeleuchtung und/oder Positionierbeleuchtung ist es, mehrere Lichtquellen und/oder mehrere zugeordnete Strahlformungsoptiken entlang einer Kreisbahn um die Empfangsoptik herum anzuordnen.

Zur Anpassung des von der Bildaufnahmevorrichtung aufgenommenen Bildausschnitts können mehrere, gegeneinander austauschbare fokussierbare Empfangsoptiken, deren Brennweiten oder Brennweitenbereiche voneinander verschieden sind, vorgesehen sein. Ein mit einer Empfangsoptik verbundener Brennweitenbereich liegt insbesondere dann vor, wenn die Entfernungseinstellung durch Innenfokussierung erfolgt.

Dann ist es bevorzugt, wenn mehrere, gegeneinander austauschbare, an die verschiedenen Brennweiten oder Brennweitenbereiche der mehreren Empfangsoptiken angepasste Strahlformungsoptiken oder Strahlformungsoptikeinheiten vorgesehen sind.

Alternativ oder zusätzlich hierzu kann die Strahlformungsoptikeinheit mehrere Strahlformungsoptiken oder mehrere Gruppen von Strahlformungsoptiken umfassen, die an die verschiedenen Brennweiten oder Brennweitenbereiche der mehreren Empfangsoptiken angepasst sind, wobei die Strahlformungsoptiken einer Gruppe von Strahlformungsoptiken an dieselbe Brennweite oder denselben Brennweitenbereich angepasst sind.

Insbesondere in diesem Fall ist es bevorzugt, wenn die Strahlformungsoptikeinheit um ihre Achse drehbar ist, da dann durch einfaches Drehen der Strahlformungsoptikeinheit der jeweiligen Lichtquelle die für die jeweilige Empfangsoptik passende Strahlformungsoptik zugeordnet werden kann.

Sofern mehrere Gruppen von Strahlformungsoptiken vorgesehen sind, ist es bevorzugt, wenn die Strahlformungsoptiken entlang einer Kreisbahn um die Empfangsoptik herum angeordnet sind, wobei die Strahlformungsoptiken verschiedener Gruppen alternierend angeordnet sind.

Alternativ kann es vorgesehen sein, dass die Strahlformungsoptikeinheit lateral verschiebbar ist.

Die Strahlformungsoptiken können auch entlang einer Linie angeordnet sein, wobei die Strahlformungsoptiken verschiedener Gruppen alternierend angeordnet sind.

Vorzugsweise ist die Bildaufnahmevorrichtung derart ausgelegt, dass die Objektbeleuchtung und die Positionierbeleuchtung nicht gleichzeitig aktiv sind. Insbesondere kann die Positionierbeleuchtung dann aktiv sein, wenn die Objektbeleuchtung inaktiv ist, und umgekehrt. Es ist aber auch möglich, dass die Positionierbeleuchtung lediglich in einem Einrichtungsmodus der Bildaufnahmevorrichtung aktiv ist. Die Objektbeleuchtung und die Positionierbeleuchtung können aber auch gleichzeitig aktiv sein und beispielsweise verschiedene Wellenlängen aufweisen. Insbesondere in diesem Fall kann vor der Empfangsoptik z.B. ein Sperrfilter zum Blocken der Positionierbeleuchtung vorgesehen sein.

Die Erfindung betrifft weiterhin ein Verfahren zur Identifikation von Objekten, mittels einer Bildaufnahmevorrichtung, wie sie vorstehend erläutert ist, wobei bei einer Verstellung der Fokussierung der Empfangsoptik die Objekt- und/oder Positionierbeleuchtung automatisch verstellt und hierdurch an die Fokussierung der Empfangsoptik anpasst wird.

Besondere Ausgestaltungen und Vorteile des erfindungsgemäßen Verfahrens ergeben sich in analoger Weise aus den vorstehend erläuterten Ausgestaltungen und Vorteilen der erfindungsgemäßen Bildaufnahmevorrichtung.

Weitere vorteilhafte Ausgestaltungen der Erfindung sind in der nachstehenden Beschreibung, der Zeichnung und den Unteransprüchen angegeben.

Die Erfindung wird im Folgenden beispielhaft unter Bezugnahme auf die Zeichnung beschrieben. Es zeigen, jeweils in schematischer Darstellung,
- Fig. 1: verschiedene Ansichten einer erfindungsgemäßen Kamera gemäß einer ersten Ausführungsform, mit einer Objekt- und Positionierbeleuchtung,
- Fig. 2: einen Axialschnitt durch eine erfindungsgemäße Kamera gemäß einer zweiten Ausführungsform, mit einer Positionierbeleuchtung,
- Fig. 3: von der Positionierbeleuchtung gemäß Fig. 2 auf einem Objekt erzeugte Positionierbilder,
- Fig. 4: von einer Positionierbeleuchtung einer erfindungsgemäßen Kamera gemäß einer dritten Ausführungsform auf einem Objekt erzeugte Positionierbilder,
- Fig. 5: einen Axialschnitt durch eine erfindungsgemäße Kamera gemäß einer vierten Ausführungsform, mit einer Positionierbeleuchtung,
- Fig. 6: eine Frontalansicht einer erfindungsgemäßen Kamera gemäß einer fünften Ausführungsform, mit einer Objekt- und Positionierbeleuchtung, und
- Fig. 7: eine Frontalansicht einer erfindungsgemäßen Kamera gemäß einer sechsten Ausführungsform, mit einer Objekt- und Positionierbeleuchtung.

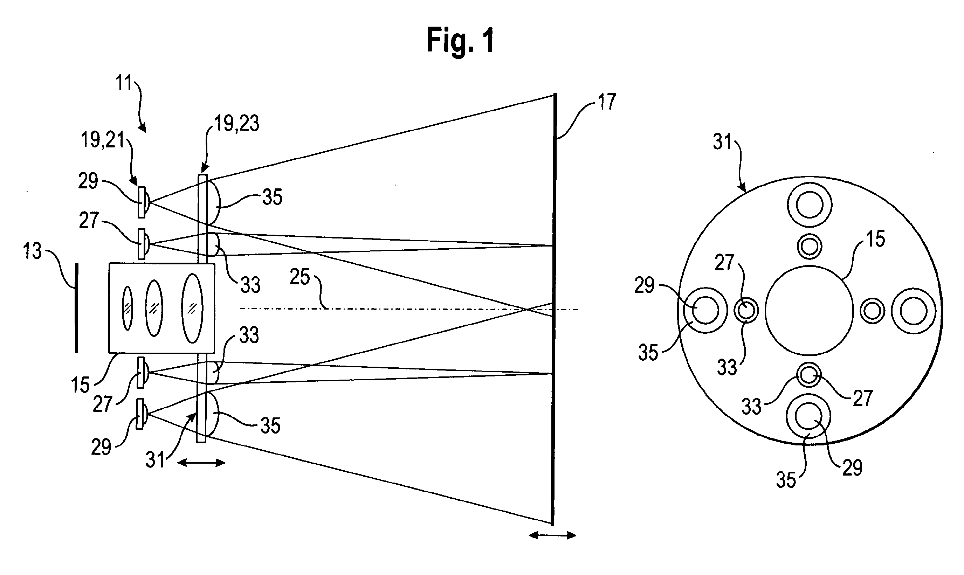

Die in Fig. 1 in einer Seitenansicht (links) und einer Frontalansicht (rechts) gezeigte Kamera 11 zur Identifikation von Objekten gemäß der ersten Ausführungsform umfasst einen Bildsensor 13 und eine Empfangsoptik in Form eines Objektivs 15, um zweidimensionale Bilder von vor der Kamera 11 befindlichen Objekten 17 aufzunehmen. Um gewährleisten zu können, dass ein jeweiliges Objekt 17 unabhängig von seinem Abstand zu der Kamera 11 scharf abgebildet wird, ist das Objektiv 15 fokussierbar ausgebildet. Hierzu kann ein Autofokus vorgesehen sein.

Darüber umfasst die Kamera 11 eine ringförmige Beleuchtungseinheit 19, in deren Mitte das Objektiv 15 aufgenommen ist. Die Beleuchtungseinheit 19 umfasst eine Lichtquelleneinheit 21 und eine der Lichtquelleneinheit 21 zugeordnete Strahlformungsoptikeinheit 23.

Die Lichtquelleneinheit 21 weist eine nicht dargestellte Aufnahmeplatte auf, auf der vier Lichtquellen 27 einer ersten Art und vier Lichtquellen 29 einer zweiten Art angeordnet sind. Die Lichtquellen 27 und die Lichtquellen 29 sind dabei jeweils entlang einer Kreisbahn um das Objektiv 15 herum und äquidistant zueinander angeordnet, wobei die Lichtquellen 27 der ersten Art weiter innen liegen, als die Lichtquellen 29 der zweiten Art.

Die Strahlformungsoptikeinheit 23 weist eine Aufnahmeplatte 31 auf, auf der vier Strahlformungsoptiken 33 einer ersten Art und vier Strahlformungsoptiken 35 einer zweiten Art angeordnet sind. Die Strahlformungsoptiken 33 und die Strahlformungsoptiken 35 sind dabei jeweils entlang einer Kreisbahn um das Objektiv 15 herum und äquidistant zueinander angeordnet, wobei die Strahlformungsoptiken 33 der ersten Art weiter innen liegen als die Strahlformungsoptiken 35 der zweiten Art.

Jeder Lichtquelle 27 der ersten Art ist eine eigene Strahlformungsoptik 33 der ersten Art zugeordnet. Jeder Lichtquelle 29 der zweiten Art ist eine eigene Strahlformungsoptik 35 der zweiten Art zugeordnet.

Die Lichtquellen 27 der ersten Art bilden gemeinsam mit den Strahlformungsoptiken 33 der ersten Art eine Positionierbeleuchtung, um auf dem jeweiligen Objekt 17 scharfe Lichtpunkte aus Licht, das von den Lichtquellen 27 der ersten Art ausgesandt und von den Strahlformungsoptiken 33 der ersten Art ab- bzw. umgelenkt wurde, zu erzeugen.

Die Lichtquellen 29 der zweiten Art bilden gemeinsam mit den Strahlformungsoptiken 35 der zweiten Art eine Objektbeleuchtung, um das jeweilige Objekt 17 mit Licht, das von den Lichtquellen 29 der zweiten Art ausgesandt und von den Strahlformungsoptiken 35 der zweiten Art ab- bzw. umgelenkt wurde, zu beleuchten und ein möglichst homogenes Bild von dem jeweiligen Objekt 17 zu erzeugen.

Die Positionierbeleuchtung 27, 33 und die Objektbeleuchtung 29, 35 sind üblicherweise jeweils auf einen ganz bestimmten Abstand der Objekte 17 von der Kamera 11 optimiert, so dass bei einer Verstellung der Fokussierung des Objektivs 15 die jeweilige Optimalbeleuchtung aufgegeben wird.

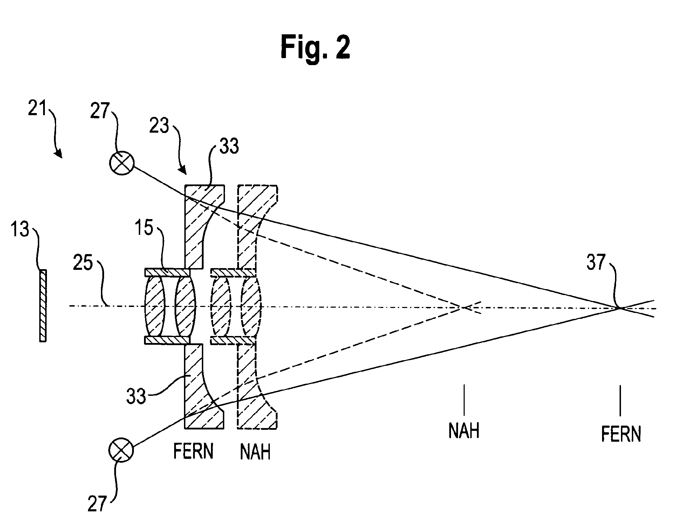

Erfindungsgemäß sind die Positionierbeleuchtung 27, 33 und die Objektbeleuchtung 29, 35 jedoch automatisch verstellbar und an die Fokussierung des Objektivs 15 anpassbar, so dass auch für verschiedene Fokussierungen bzw. Entfernungseinstellungen des Objektivs 15 jeweils eine zumindest weitgehend optimale Positionier- und Objektbeleuchtung gewährleistet werden kann, wie anhand der weiteren Ausführungsformen gemäß den Fig. 2 bis 6 nachstehend noch näher erläutert wird.

Die Kamera 11 gemäß der zweiten Ausführungsform gemäß Fig. 2 weist im Gegensatz zu der Kamera 11 gemäß der ersten Ausführungsform gemäß Fig. 1 keine Objektbeleuchtung auf, sondern lediglich eine Positionierbeleuchtung 27, 33. Natürlich ist auch eine Ausführung mit Objektbeleuchtung möglich. Die Lichtquelleneinheit 21 der Positionierbeleuchtung 27, 33 umfasst zwei bezüglich der optischen Achse 25 des Objektivs 15 diametral gegenüberliegende Lasersender 27. Die Lasersender 27 sind hierbei hinter einer transmittiven Strahlformungsoptikeinheit 23, die zwei Strahlformungsoptiken 33 aufweist, angeordnet. Die Strahlformungsoptiken 33 sind an ihren Rückseiten jeweils eben ausgebildet und weisen an ihren Vorderseiten jeweils eine gekrümmte Oberfläche auf, an denen die Laserstrahlen der Lasersender 27 jeweils gebrochen werden, bevor sie sich in einem objektseitigen Schnittpunkt 37 kreuzen. Anstelle der Lasersender 27 können auch andere Strahlungsquellen wie beispielsweise Leuchtdioden verwendet werden.

Die Strahlformungsoptik 23 ist fest mit dem Objektiv 15 verbunden, so dass ein axiales Verschieben des Objektivs 15, um die Fokussierung des Objektivs 15 zu verstellen, zwingend ein axiales Verschieben der Strahlformungsoptikeinheit 23 bewirkt. Die Lichtquelleneinheit 21 mit den beiden Lasersendern 27 wird bei einer Verstellung der Fokussierung des Objektivs 15 nicht verschoben, so dass eine Änderung des Abstands zwischen der Strahlformungsoptikeinheit 23 und der Lichtquelleneinheit 21 auftritt. Auf diese Weise kann eine automatische Anpassung der Positionierbeleuchtung 27, 33 an die verstellte Fokussierung erreicht werden, wie nachstehend noch näher erläutert wird.

Das Objektiv 15 und die damit fest verbundene Strahlformungsoptikeinheit 23 sind in Fig. 2 in zwei verschiedenen Verstellpositionen gezeigt.

In der ersten Verstellposition (in Fig. 2 in Form von gestrichelten Linien dargestellt), in der das Objektiv 15 weiter von dem Bildsensor 13 entfernt liegt, wird auf einen geringeren Abstand NAH fokussiert. In der ersten Verstellposition werden die Laserstrahlen an den Vorder- und Rückseiten der Strahlformungsoptik 23 derart gebrochen, dass sie sich im Abstand NAH vor der Kamera 11 schneiden.

In der zweiten Verstellposition (in Fig. 2 in Form von durchgezogenen Linien dargestellt), in der das Objektiv 15 näher zu dem Bildsensor 13 liegt, wird auf einen größeren Abstand FERN fokussiert. In der zweiten Verstellposition werden die Laserstrahlen an den Vorder- und Rückseiten der Strahlformungsoptiken 33 derart gebrochen, dass sie sich im Abstand FERN vor der Kamera 11 schneiden.

Die Anpassung der Positionierbeleuchtung 27, 33 erfolgt also durch Verstellung des Abstands, bei dem sich die beiden Laserstrahlen treffen, bzw. durch Änderung der Neigung der Abstrahlrichtungen der von der Kamera 11 ausgesandten Laserstrahlen gegenüber der optischen Achse 25 der Empfangsoptik 15.

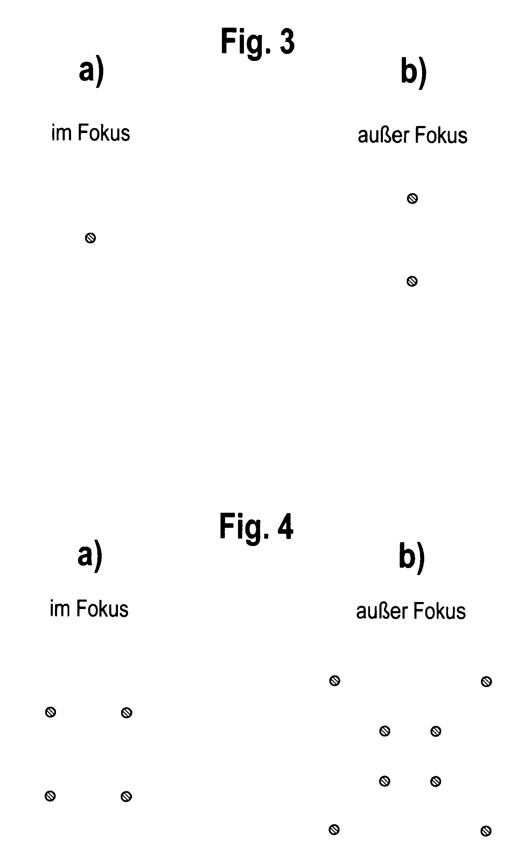

Befindet sich ein Objekt 17 im Fokus der Positionierbeleuchtung 27, 33, liegt auch der Schnittpunkt der beiden Laserstrahlen auf dem Objekt 17, auf dem dann ein gemeinsamer Lichtpunkt sichtbar ist (Fig. 3a). Der gemeinsame Lichtpunkt kann beispielsweise auch zur Visualisierung einer Objektfeldmitte verwendet werden. Befände sich ein Objekt 17 außer Fokus, würden zwei getrennte Lichtpunkte auftreten (Fig. 3b).

Grundsätzlich ist es jedoch auch möglich, dass mehr als zwei Lasersender 27 verwendet werden. Beispielsweise können bei Verwendung von insgesamt acht Lasersendern 27 gemäß einer dritten Ausführungsform vier gemeinsame Lichtpunkte erzeugt werden, die zur Visualisierung eines Lesefeldes ein Rechteck bilden (Fig. 4a). Bei einem außer Fokus befindlichen Objekt 17 würden dann acht getrennte Lichtpunkte auftreten (Fig. 4b).

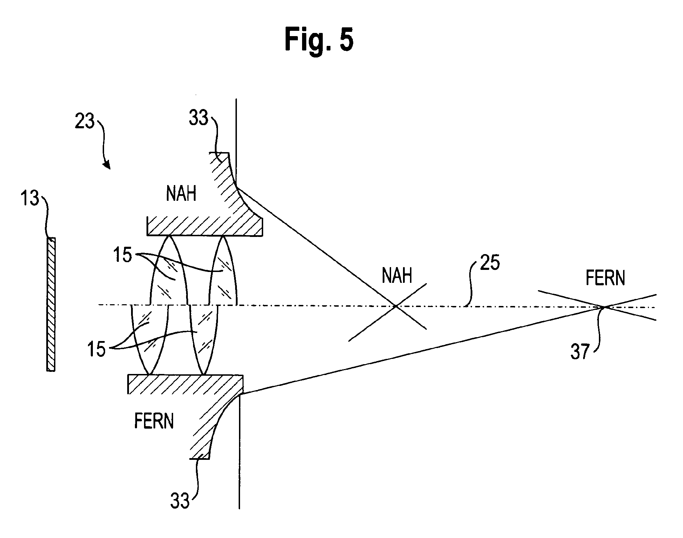

Fig. 5 zeigt die Kamera 11 gemäß der vierten Ausführungsform, die im Wesentlichen der Kamera 11 gemäß der zweiten Ausführungsform gemäß Fig. 2 entspricht, so dass im Folgenden lediglich auf die Unterschiede zwischen diesen beiden Ausführungsformen eingegangen wird. Im Vergleich zu der Kamera 11 aus Fig. 2 ist bei der Kamera 11 gemäß Fig. 5 die Strahlformungsoptikeinheit 23 nicht transmittiv ausgebildet, sondern reflektiv. Die Strahlformungsoptikeinheit 23 gemäß Fig. 5 umfasst hierzu zwei Strahlformungsoptiken 33, die an ihren Vorderseiten jeweils eine gekrümmte Oberfläche aufweisen, an denen die Laserstrahlen der Lasersender 27, die in Fig. 4 senkrecht auf die optische Achse 25 des Objektivs 15 gerichtet sind, jeweils gebrochen werden, bevor sie sich in dem objektseitigen Schnittpunkt 37 kreuzen. Die Entfernungseinstellung NAH ist in der oberen Bildhälfte von Fig. 5, die Entfernungseinstellung FERN in der unteren Bildhälfte von Fig. 5 dargestellt.

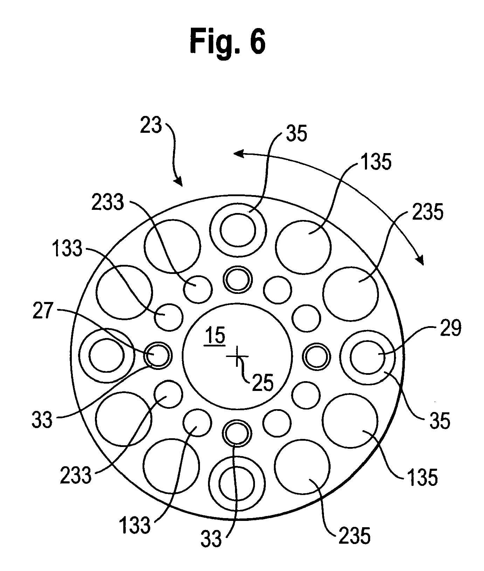

Bei der Kamera 11 gemäß der fünften Ausführungsform (Fig. 6), die mit der Kamera 11 aus Fig. 1 verwandt ist, sind drei gegeneinander austauschbare Objektive 15 vorgesehen (von denen lediglich ein Objektiv 15 gezeigt ist), die voneinander verschiedene Brennweiten oder Brennweitenbereiche aufweisen. Entsprechend umfasst die Strahlformungsoptikeinheit 23 drei Gruppen von Strahlformungsoptiken 33, 35; 133, 135; 233, 235, die an die verschiedenen Brennweiten oder Brennweitenbereiche der drei Objektive 15 angepasst sind, wobei jedem Objektiv 15 eine eigene Strahlformungsoptikgruppe 33, 35; 133, 135; 233, 235 zugeordnet ist. Die Lichtquelleneinheit 21 der Kamera 11 gemäß Fig. 6 hingegen entspricht der Lichtquelleneinheit 21 aus Fig. 1.

Jede Strahlformungsoptikgruppe 33, 35; 133, 135; 233, 235 umfasst vier Strahlformungsoptiken 33, 133, 233 der ersten Art (für die Positionierbeleuchtung) und vier Strahlformungsoptiken 35, 135, 235 der zweiten Art (für die Objektbeleuchtung). Die Strahlformungsoptiken 33, 133, 233 der ersten Art und die Strahlformungsoptiken 35, 135, 235 der zweiten Art sind jeweils entlang einer Kreisbahn um das Objektiv 15 herum angeordnet, wobei für jede Art die Strahlformungsoptiken 33, 133, 233, 35, 135, 235 verschiedener Gruppen alternierend angeordnet sind. Veranschaulicht dargestellt kann die Strahlformungsoptikeinheit 23 gemäß Fig. 6 dadurch erhalten werden, dass zwischen die Strahlformungsoptiken 33, 35 aus Fig. 1 (die der ersten Strahlformungsoptikgruppe aus Fig. 6 entsprechen) jeweils die Strahlformungsoptiken 133, 135, 233, 235 der zweiten und dritten Strahlformungsoptikgruppen 133, 135; 233, 235 angeordnet werden.

Darüber hinaus ist die Strahlformungsoptikeinheit 23 um ihre Achse, die der optischen Achse 25 des Objektivs 15 entspricht, drehbar.

Wird nun das Objektiv 15 der Kamera 11 gewechselt, um eine andere Brennweite oder einen anderen Brennweitenbereich zu erhalten, kann die für das jeweils eingesetzte Objektiv 15 passende Strahlformungsoptikgruppe 33, 35; 133, 135; 233, 235 durch einfaches Drehen der Strahlformungsoptikeinheit 23 ausgewählt und in Deckung mit den Lichtquellen 27, 29 der Kamera 11 gebracht werden.

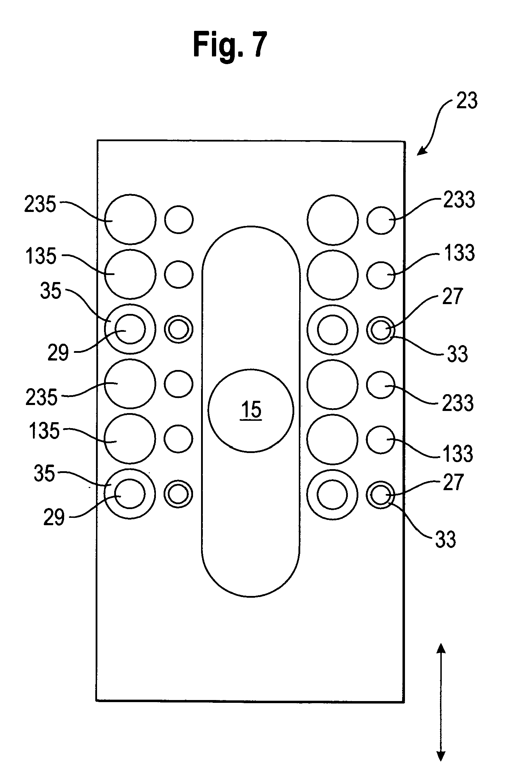

Fig. 7 zeigt die Kamera 11 gemäß der sechsten Ausführungsform, die im Wesentlichen der Kamera 11 gemäß der fünften Ausführungsform gemäß Fig. 6 entspricht, so dass im Folgenden lediglich auf die Unterschiede zwischen diesen beiden Ausführungsformen eingegangen wird. Im Vergleich zu der Kamera 11 aus Fig. 6 ist bei der Kamera 11 gemäß Fig. 7 die Strahlformungsoptikeinheit 23 nicht um die optische Achse 25 des Objektivs 15 drehbar, sondern lateral zu der optischen Achse 25 des Objektivs 15 verschiebbar. Entsprechend sind die Strahlformungsoptiken 33, 133, 233 der ersten Art und die Strahlformungsoptiken 35, 135, 235 der zweiten Art nicht jeweils entlang einer Kreisbahn um das Objektiv 15 herum angeordnet, sondern jeweils entlang einer Linie. Wird bei der Kamera 11 gemäß Fig. 7 das Objektiv 15 der Kamera 11 gewechselt, kann die für das jeweils eingesetzte Objektiv 15 passende Strahlformungsoptikgruppe 33, 35; 133, 135; 233, 235 durch einfaches Verschieben der Strahlformungsoptikeinheit 23 ausgewählt werden.

Die vorliegende Erfindung ermöglicht, auch für verschiedene Entfernungseinstellungen des Objektivs 15 immer die optimale Objekt- und/oder Positionierbeleuchtung zu gewährleisten.

### Bezugszeichenliste

- 11: Kamera
- 13: Bildsensor
- 15: Objektiv
- 17: Objekt
- 19: Beleuchtungseinheit
- 21: Lichtquelleneinheit
- 23: Strahlformungsoptikeinheit
- 25: optische Achse
- 27: Lichtquelle
- 29: Lichtquelle
- 31: Aufnahmeplatte
- 33: Strahlformungsoptik
- 35: Strahlformungsoptik
- 37: Schnittpunkt
- 133: Strahlformungsoptik
- 135: Strahlformungsoptik
- 233: Strahlformungsoptik
- 235: Strahlformungsoptik

## Patentansprüche

1. Bildaufnahmevorrichtung, insbesondere Kamera, zur Identifikation von Objekten, mit einer fokussierbaren Empfangsoptik (15) und einer eine Positionierbeleuchtung oder eine Objekt- und Positionierbeleuchtung (27, 29, 33, 35) umfassenden Beleuchtungseinheit (19), wobei die Objekt- und/oder Positionierbeleuchtung (27, 29, 33, 35) verstellbar und hierdurch an die Fokussierung der Empfangsoptik (15) anpassbar ist, wobei die Objekt- und/oder Positionierbeleuchtung (27, 29, 33, 35) derart an die Empfangsoptik (15) gekoppelt ist, dass eine Verstellung der Fokussierung der Empfangsoptik (15) automatisch eine Anpassung der Objekt- und/oder Positionierbeleuchtung (27, 29, 33, 35) an die verstellte Fokussierung bewirkt, wobei die Beleuchtungseinheit (19) eine Lichtquelleneinheit (21) mit wenigstens einer Lichtquelle (27, 29) und eine der Lichtquelleneinheit (21) zugeordnete Strahlformungsoptikeinheit (23) mit wenigstens einer Strahlformungsoptik (33, 35) umfasst, wobei die Anpassung der Positionierbeleuchtung (27, 33) durch Verstellung der relativen Lage der Strahlformungsoptikeinheit (23) zu der Lichtquelleneinheit (21) erfolgt, **gekennzeichnet dadurch dass** die Positionierbeleuchtung (27, 33) wenigstens ein Paar Lichtquellen (27) und eine oder mehrere, dem wenigstens einem Paar Lichtquellen (27) zugeordnete Strahlformungsoptiken (33) umfasst, um gebündelte Lichtstrahlen zu erzeugen, die sich in der durch die Empfangsoptik (15) scharf gestellten Entfernung schneiden.

2. Bildaufnahmevorrichtung nach Anspruch 1,
**dadurch gekennzeichnet,**
**dass** die Anpassung der Positionierbeleuchtung (27, 33) durch Verstellung des Abstands zwischen der Strahlformungsoptikeinheit (23) und der Lichtquelleneinheit (21) erfolgt.

3. Bildaufnahmevorrichtung nach Anspruch 1 oder 2,
**dadurch gekennzeichnet,**
**dass** die Anpassung der Objektbeleuchtung (29, 35) durch Verstellung der relativen Lage der Strahlformungsoptikeinheit (23) zu der Lichtquelleneinheit (21), insbesondere des Abstands zwischen der Strahlformungsoptikeinheit (23) und der Lichtquelleneinheit (21), erfolgt.

4. Bildaufnahmevorrichtung nach einem der vorstehenden Ansprüche,
**dadurch gekennzeichnet,**
**dass** die Verstellung der Fokussierung der Empfangsoptik (15) durch axiales Verschieben der Empfangsoptik (15) oder des für die Verstellung der Fokussierung maßgeblichen Teils hiervon erfolgt, und/oder
**dass** die Verstellung der Objekt- und/oder Positionierbeleuchtung (27, 29, 33, 35) durch axiales Verschieben der Lichtquelleneinheit (21) und/ oder der Strahlformungsoptikeinheit (23) erfolgt.

5. Bildaufnahmevorrichtung nach einem der vorstehenden Ansprüche,
**dadurch gekennzeichnet,**
**dass** die Lichtquelleneinheit (21) oder die Strahlformungsoptikeinheit (23) oder ein Teil hiervon fest mit der Empfangsoptik (15) oder dem für die Verstellung der Fokussierung maßgeblichen Teil hiervon verbunden ist.

6. Bildaufnahmevorrichtung nach einem der vorstehenden Ansprüche,
**dadurch gekennzeichnet,**
**dass** die Anpassung der Objekt- und/oder Positionierbeleuchtung (27, 29, 33, 35) durch Änderung der Brennweite der Objekt- und/oder Positionierbeleuchtung (27, 29, 33, 35) und/oder durch Änderung der Neigung der Abstrahlrichtungen von von der Bildaufnahmevorrichtung (11) ausgesandten Strahlenbündeln gegenüber der optischen Achse (25) der Empfangsoptik (15) erfolgt.

7. Bildaufnahmevorrichtung nach einem der vorstehenden Ansprüche,
**dadurch gekennzeichnet,**
**dass** die Lichtquellen (27) der Positionierbeleuchtung (27, 33) Lasersender oder Leuchtdioden sind.

8. Bildaufnahmevorrichtung nach einem der vorstehenden Ansprüche, **dadurch gekennzeichnet,**
**dass** die Anordnung und/oder Gestaltung der Beleuchtungseinheit (19) auf die verschiedenen Fokussierungen der Empfangsoptik (15) abgestimmt ist.

9. Bildaufnahmevorrichtung nach einem der vorstehenden Ansprüche,
**dadurch gekennzeichnet,**
**dass** mehrere Lichtquellen (27, 29) und/oder mehrere zugeordnete Strahlformungsoptiken (33, 35) entlang einer Kreisbahn um die Empfangsoptik (15) herum angeordnet sind.

10. Bildaufnahmevorrichtung nach einem der vorstehenden Ansprüche,
**dadurch gekennzeichnet,**
**dass** mehrere, gegeneinander austauschbare fokussierbare Empfangsoptiken (15), deren Brennweiten oder Brennweitenbereiche voneinander verschieden sind, vorgesehen sind.

11. Bildaufnahmevorrichtung nach Anspruch 10,
**dadurch gekennzeichnet,**
**dass** mehrere, gegeneinander austauschbare, an die verschiedenen Brennweiten oder Brennweitenbereiche der mehreren Empfangsoptiken (15) angepasste Strahlformungsoptiken (33, 35) oder Strahlformungsoptikeinheiten (23) vorgesehen sind.

12. Bildaufnahmevorrichtung nach Anspruch 10 oder 11,
**dadurch gekennzeichnet,**
**dass** die Strahlformungsoptikeinheit (23) mehrere Strahlformungsoptiken (33, 35) oder mehrere Gruppen von Strahlformungsoptiken (33, 35; 133, 135; 233, 235) umfasst, die an die verschiedenen Brennweiten oder Brennweitenbereiche der mehreren Empfangsoptiken (15) angepasst sind, wobei die Strahlformungsoptiken (33, 35 133, 135, 233, 235) einer Gruppe von Strahlformungsoptiken (33, 35; 133, 135; 233, 235) an dieselbe Brennweite oder denselben Brennweitenbereich angepasst sind.

13. Bildaufnahmevorrichtung nach Anspruch 12,
**dadurch gekennzeichnet,**
**dass** die Strahlformungsoptikeinheit (23) um ihre Achse (25) drehbar ist und/oder die Strahlformungsoptiken (33, 35; 133, 135, 233, 235) entlang einer Kreisbahn um die Empfangsoptik (15) herum angeordnet sind, wobei die Strahlformungsoptiken (33, 35; 133, 135, 233, 235) verschiedener Gruppen alternierend angeordnet sind.

14. Bildaufnahmevorrichtung nach Anspruch 12,
**dadurch gekennzeichnet,**
**dass** die Strahlformungsoptikeinheit (23) lateral verschiebbar ist und/oder die Strahlformungsoptiken (33, 35; 133, 135, 233, 235) entlang einer Linie angeordnet sind, wobei die Strahlformungsoptiken (33, 35; 133, 135, 233, 235) verschiedener Gruppen alternierend angeordnet sind.

15. Verfahren zur Identifikation von Objekten, mittels einer Bildaufnahmevorrichtung nach einem der vorstehenden Ansprüche,
**dadurch gekennzeichnet,**
**dass** bei einer Verstellung der Fokussierung der Empfangsoptik (15) die Objekt- und/oder Positionierbeleuchtung (27, 29, 33, 35) automatisch verstellt und hierdurch an die Fokussierung der Empfangsoptik (15) anpasst wird, wobei die Anpassung der Positionierbeleuchtung (27, 33) durch Verstellung der relativen Lage der Strahlformungsoptikeinheit (23) zu der Lichtquelleneinheit (21) erfolgt, und wobei sich die gebündelten Lichtstrahlen in der durch die Empfangsoptik (15) scharf gestellten Entfernung schneiden.

## Claims

1. An image acquisition apparatus, in particular a camera, for the identification of objects, having a focusable optical receiving system (15) and an illumination unit (19) comprising a positioning illumination or an object illumination and positioning illumination (27, 29, 33, 35), wherein the object illumination and/or positioning illumination (27, 29, 33, 35) is/are adjustable and can hereby be matched to the focus of the optical receiving system (15); wherein the object illumination and/or positioning illumination (27, 29, 33, 35) is/are coupled to the optical receiving system (15) such that an adjustment of the focus of the optical receiving system (15) automatically effects a matching of the object illumination and/or positioning illumination (27, 29, 33, 35) to the adjusted focus; wherein the illumination unit (19) comprises a light source unit (21) having at least one light source (27, 29) and an optical beam shaping unit (23) associated with the light source unit (21) and having at least one optical beam shaping system (33, 35); and wherein the matching of the positioning illumination (27, 33) takes place by adjustment of the relative position of the optical beam shaping unit (23) with respect to the light source unit (21),
**characterized in that**
the positioning illumination (27, 33) comprises at least one pair of light sources (27) and one or more optical beam shaping systems (33) associated with the at least one pair of light sources (27) to generate bundled light beams which intersect at the distance focused by the optical receiving system (15).

2. An image acquisition apparatus in accordance with claim 1,
**characterized in that**
the matching of the positioning illumination (27, 33) takes place by adjustment of the spacing between the optical beam shaping unit (23) and the light source unit (21).

3. An image acquisition apparatus in accordance with claim 1 or claim 2,
**characterized in that**
the matching of the object illumination (29, 35) takes place by adjustment of the relative position of the optical beam shaping unit (23) with respect to the light source unit (21), in particular of the spacing between the optical beam shaping unit (23) and the light source unit (21).

4. An image acquisition apparatus in accordance with any one of the preceding claims,
**characterized in that**
the adjustment of the focus of the optical receiving system (15) takes place by axial displacement of the optical receiving system (15) or of the part thereof decisive for the adjustment of the focus;
and/or
**in that** the adjustment of the object illumination and/or positioning illumination (27, 29, 33, 35) takes place by axial displacement of the light source unit (21) and/or of the optical beam shaping unit (23).

5. An image acquisition apparatus in accordance with any one of the preceding claims,
**characterized in that**
the light source unit (21) or the optical beam shaping unit (23) or a part thereof is fixedly connected to the optical receiving system (15) or to the part thereof decisive for the adjustment of the focus.

6. An image acquisition apparatus in accordance with any one of the preceding claims,
**characterized in that**
the matching of the object illumination and/or positioning illumination (27, 29, 33, 35) takes place by changing the focal length of the object illumination and/or positioning illumination (27, 29, 33, 35) and/or by changing the inclination of the radiation directions of bundles of rays transmitted by the image acquisition apparatus (11) with respect to the optical axis (25) of the optical receiving system (15).

7. An image acquisition apparatus in accordance with any one of the preceding claims,
**characterized in that**
the light sources (27) of the positioning illumination (27, 33) are laser transmitters or light emitting diodes.

8. An image acquisition apparatus in accordance with any one of the preceding claims,
**characterized in that**
the arrangement and/or design of the illumination unit (19) is matched to the different focuses of the optical receiving system (15).

9. An image acquisition apparatus in accordance with any one of the preceding claims,
**characterized in that**
a plurality of light sources (27, 29) and/or a plurality of associated optical beam shaping systems (33, 35) are arranged along a circular path about the optical receiving system (15).

10. An image acquisition apparatus in accordance with any one of the preceding claims,
**characterized in that**
a plurality of mutually replaceable focusable optical receiving systems (15) are provided whose focal lengths or focal length ranges are different from one another.

11. An image acquisition apparatus in accordance with claim 10,
**characterized in that**
a plurality of mutually replaceable optical beam shaping systems (33, 35) or optical beam shaping units (23) are provided which are matched to the different focal lengths or focal length ranges of the plurality of optical receiving systems (15).

12. An image acquisition apparatus in accordance with claim 10 or claim 11,
**characterized in that**
the optical beam shaping unit (23) comprises a plurality of optical beam shaping systems (33, 35) or a plurality of groups of optical beam shaping systems (33, 35; 133, 135; 233, 235) which are matched to the different focal lengths or focal length ranges of the plurality of optical receiving systems (15), with the optical beam shaping systems (33, 35, 133, 135, 233, 235) of a group of optical beam shaping systems (33, 35; 133, 135; 233, 235) being matched to the same focal length or to the same focal length range.

13. An image acquisition apparatus in accordance with claim 12,
**characterized in that**
the optical beam shaping unit (23) is rotatable about its axis (25) and/or the optical beam shaping systems (33, 35; 133, 135; 233, 235) are arranged along a circular path about the optical receiving system (15), with the optical beam shaping systems (33, 35; 133, 135; 233, 235) of different groups being arranged alternately.

14. An image acquisition apparatus in accordance with claim 12,
**characterized in that**
the optical beam shaping unit (23) is laterally displaceable and/or the optical beam shaping systems (33, 35; 133, 135; 233, 235) are arranged along a line, with the optical beam shaping systems (33, 35; 133, 135, 233, 235) of different groups being arranged alternately.

15. A method for the identification of objects by means of an image acquisition apparatus in accordance with any one of the preceding claims,
**characterized in that**,
on an adjustment of the focus of the optical receiving system (15), the object illumination and/or positioning illumination (27, 29, 33, 35) is/are automatically adjusted and is/are hereby matched to the focus of the optical receiving system (15), with the matching of the positioning illumination (27, 33) taking place by adjustment of the relative position of the optical beam shaping unit (23) with respect to the light source unit (21), and with the bundled light beams intersecting at the distance focused by the optical receiving system (15).

## Revendications

1. Dispositif de prise d'image, en particulier caméra, pour l'identification d'objets, comportant une optique de réception (15) focalisable et une unité d'éclairage (19) comprenant un éclairage de positionnement ou un éclairage d'objet et de positionnement (27, 29, 33, 35), l'éclairage d'objet et/ou de positionnement (27, 29, 33, 35) étant réglable et ainsi adaptable à la focalisation de l'optique de réception (15), l'éclairage d'objet et/ou de positionnement (27, 29, 33, 35) étant accouplé à l'optique de réception (15) de telle sorte qu'un réglage de la focalisation de l'optique de réception (15) produit automatiquement une adaptation de l'éclairage d'objet et/ou de positionnement (27, 29, 33, 35) à la focalisation réglée, l'unité d'éclairage (19) comprenant une unité formant source lumineuse (21) avec au moins une source lumineuse (27, 29) et une unité optique de mise en forme de faisceau (23) associée à l'unité formant source lumineuse (21), avec au moins une optique de mise en forme de faisceau (33, 35), l'adaptation de l'éclairage de positionnement (27, 33) étant effectuée par réglage de la position relative de l'unité optique de mise en forme de faisceau (23) par rapport à l'unité formant source lumineuse (21), **caractérisé en ce que** l'éclairage de positionnement (27, 33) comprend au moins une paire de sources lumineuses (27) et une ou plusieurs optiques de mise en forme de faisceau (33) associées à ladite au moins une paire de sources lumineuses (27) pour engendrer des faisceaux lumineux concentrés qui se recoupent à la distance mise au point par l'optique de réception (15).

2. Dispositif de prise d'image selon la revendication 1, **caractérisé en ce que** l'adaptation de l'éclairage de positionnement (27, 33) est effectuée par réglage de la distance entre l'unité optique de mise en forme de faisceau (23) et l'unité formant source lumineuse (21).

3. Dispositif de prise d'image selon la revendication 1 ou 2, **caractérisé**
**en ce que** l'adaptation de l'éclairage d'objet (29, 35) est effectuée par réglage de la position relative de l'unité optique de mise en forme de faisceau (23) par rapport à l'unité formant source lumineuse (21), en particulier de la distance entre l'unité optique de mise en forme de faisceau (23) et l'unité formant source lumineuse (21).

4. Dispositif de prise d'image selon l'une des revendications précédentes, **caractérisé en ce que** le réglage de la focalisation de l'optique de réception (15) est effectué par déplacement axial de l'optique de réception (15) ou de la partie de celle-ci qui est déterminante pour le réglage de la focalisation,
et/ou
**en ce que** le réglage de l'éclairage d'objet et/ou de positionnement (27, 29, 33, 35) est effectué par déplacement axial de l'unité formant source lumineuse (21) et/ou de l'unité optique de mise en forme de faisceau (23).

5. Dispositif de prise d'image selon l'une des revendications précédentes, **caractérisé en ce que** l'unité formant source lumineuse (21) ou l'unité optique de mise en forme de faisceau (23) ou une partie de celle-ci est reliée de manière fixe avec l'optique de réception (15) ou avec la partie de celle-ci qui est déterminante pour le réglage de la focalisation.

6. Dispositif de prise d'image selon l'une des revendications précédentes, **caractérisé en ce que** l'adaptation de l'éclairage d'objet
et/ou de positionnement (27, 29, 33, 35) est effectuée par modification de la distance focale de l'éclairage d'objet et/ou de positionnement (27, 29, 33, 35) et/ou par modification de l'inclinaison des directions de rayonnement de faisceaux de rayons lumineux émis par le dispositif de prise d'images (11) par rapport à l'axe optique (25) de l'optique de réception (15).

7. Dispositif de prise d'image selon l'une des revendications précédentes, **caractérisé en ce que** les sources lumineuses (27) de l'éclairage de positionnement (27, 33) sont des émetteurs à laser ou des diodes électroluminescentes.

8. Dispositif de prise d'image selon l'une des revendications précédentes, **caractérisé en ce que** l'agencement et/ou la réalisation de l'unité d'éclairage (19) est réglé(e) sur les différentes focalisation de l'optique de réception (15).

9. Dispositif de prise d'image selon l'une des revendications précédentes, **caractérisé en ce que** plusieurs sources lumineuses (27, 29) et/ou plusieurs optiques associées de mise en forme de faisceau (33, 35) sont agencées le long d'une trajectoire circulaire tout autour de l'optique de réception (15).

10. Dispositif de prise d'image selon l'une des revendications précédentes, **caractérisé en ce qu'**il est prévu plusieurs optiques de réception (15) focalisables et mutuellement interchangeables dont les distances focales ou plages focales sont différentes les unes des autres.

11. Dispositif de prise d'image selon la revendication 10, **caractérisé en ce qu'**il est prévu plusieurs optiques de réception (15) ou unités d'optique de mise en forme de faisceau (23) focalisables et mutuellement interchangeables, adaptées aux différentes distances focales ou plages focales des plusieurs optiques de réception (15).

12. Dispositif de prise d'image selon la revendication 10 ou 11, **caractérisé en ce que** l'unité d'optique de mise en forme de rayon (23) comprend plusieurs optiques de mise en forme de faisceaux (33, 35) ou plusieurs groupes d'optiques de mise en forme de faisceaux (33, 35 ; 133, 135 ; 233, 235) qui sont adapté(e)s aux différentes distances focales ou plages focales des plusieurs optiques de réception, les optiques de mise en forme de faisceaux (33, 35 ; 133, 135 ; 233, 235) d'un groupe d'optiques de mise en forme de faisceaux (33, 35 ; 133, 135 ; 233, 235) étant adaptées à la même distance focale ou la même plage focale.

13. Dispositif de prise d'image selon la revendication 12, **caractérisé en ce que** l'unité d'optique de mise en forme de faisceau (23) est rotative autour de son axe (25) et/ou les optiques de mise en forme de faisceaux (33, 35 ; 133, 135 ; 233, 235) sont agencées le long d'une trajectoire circulaire tout autour de l'optique de réception (15), les optiques de mise en forme de faisceaux (33, 35 ; 133, 135 ; 233, 235) de différents groupes étant agencées en alternance.

14. Dispositif de prise d'image selon la revendication 12, **caractérisé en ce que** l'unité d'optique de mise en forme de faisceau (23) est latéralement déplaçable et/ou les optiques de mise en forme de faisceaux (33, 35 ; 133, 135 ; 233, 235) sont agencées le long d'une ligne, les optiques de mise en forme de faisceaux (33, 35 ; 133, 135 ; 233, 235) de différents groupes étant agencées en alternance.

15. Procédé d'identification d'objets au moyen d'un dispositif de prise d'image selon l'une des revendications précédentes, **caractérisé en ce que** lors d'un réglage de la focalisation de l'optique de réception (15), l'éclairage d'objet et/ou de positionnement (27, 29, 33, 35) est automatiquement réglé et ainsi adapté à la focalisation de l'optique de réception (15), l'adaptation de l'éclairage de positionnement (27, 33) étant effectuée par réglage de la position relative de l'unité d'optique de mise en forme de faisceau (23) par rapport à l'unité formant source lumineuse (21), les rayons lumineux concentrés se recoupant à la distance mise au point par l'optique de réception (15).
